Europäisches Patentamt

European Patent Office

Office européen des brevets

(11) Veröffentlichungsnummer: **0 260 553**
**A2**

## (12) EUROPÄISCHE PATENTANMELDUNG

(21) Anmeldenummer: 87112994.6

(22) Anmeldetag: 04.09.87

(51) Int. Cl.⁴: **H01R 4/70** , H02G 15/18

(30) Priorität: 18.09.86 DE 3631769

(43) Veröffentlichungstag der Anmeldung:
23.03.88 Patentblatt 88/12

(84) Benannte Vertragsstaaten:
**AT BE CH DE ES FR GB GR IT LI LU NL SE**

(71) Anmelder: DSG Schrumpfschlauch GmbH
**Heidestrasse**
**D-5309 Meckenheim(DE)**

(72) Erfinder: **Arenz, Helmut**
**Ahrweg 11**
**D-5305 Alfter-Impekoven(DE)**

(74) Vertreter: Patentanwälte Grünecker,
**Kinkeldey, Stockmair & Partner**
**Maximilianstrasse 58**
**D-8000 München 22(DE)**

(54) Verfahren und Bausatz zum Ausbilden definierter längswasserdichter Bereiche in eine Vielzahl von Einzellitzen und/oder Kabelsträngen aufweisenden Verdrahtungen.

(57) Die Erfindung bezieht sich auf ein Verfahren und auf einen Bausatz zum örtlich definierten Längswasserabdichten eine Vielzahl von Leitersträngen, Einzellitzen und/oder Kabelsträngen aufweisenden Verdrahtung für die elektrische oder elektronische Steuerung von Funktionen. Zwischen die Leiterstränge einer solchen Verdrahtung wird ein Kunststoffelement eingebettet, welches einen thermoplastischen Schmelzkleber enthält oder aus einem thermoplastischen Schmelzkleber besteht. Dieses Kunststoffelement quillt bei Erwärmung auf. Außen wird auf die Verdrahtung ein wärmeschrumpfendes Bauteil aufgeschoben. Bei Erwärmung schrumpft das wärmeschrumpfende Bauteil eng um die Verdrahtung zurück, und quillt das Kunststoffelement, welches innerhalb der Leiterstränge angeordnet ist, auf. Durch das Zurückschrumpfen des wärmeschrumpfenden Bauteiles und das Aufquellen des Kunststoffelementes werden Druckkräfte im Inneren des von dem wärmeschrumpfenden Bauteils umschlossenen Raumes hervorgerufen, die den bei der Wärmebehandlung - schmelzflüssig gewordenen Kleber dichtend in alle Hohlräume drücken.

## Verfahren und Bausatz zum Ausbilden definierter längswasserdichter Bereiche in eine Vielzahl von Einzellitzen und/oder Kabelsträngen aufweisenden Verdrahtungen

Die Erfindung betrifft ein Verfahren zum Ausbilden definierter längswasserdichter Bereiche in Verdrahtungen, die aus einer Vielzahl von Einzellitzen und/oder Kabelsträngen bestehen. Solche Verdrahtungen dienen in erster Linie zur elektrischen und elektronischen Steuerung von Funktionen. Ferner betrifft die Erfindung einen Bausatz zum Ausbilden derartiger örtlicher Abdichtungsstellen.

Beispielsweise im Fahrzeugbau ist häufig das Problem zu lösen, vielgliedrige Verdrahtungen, wie z.B. Kabelbäume, in örtlich definierten Bereichen längswasserdicht auszubilden. Dieses Problem stellt sich primär in der Umgebung von Lötstützpunkten und wenn eine Verdrahtung durch Trennwände hindurch, z.B. vom Motorraum in den Innenraum eines Fahrzeuges, geführt wird. Häufig ist es auch erforderlich, eine Verdrahtung wasser- und gasdicht auszubilden. Läuft Wasser an unabgedichteten Einzellitzen und/oder Kabelsträngen eines Verdrahtungsstems entlang, so treten in Lötstützpunkten schwere Korosionsschäden auf. Gerät solches Längswasser in .den Bereich von Steckverbindungen, so kann es zu Kurzschlüssen kommen. Beispielsweise bei ABS-Bremssystemen können schwere Unfälle die Folge sein. Fehlt eine Längswasserabdichtung, beispielsweise im Bereich des Durchtritts einer Verdrahtung vom Motorraum in die Zentralelektronik eines Automobils, so kann auf diese Weise Feuchtigkeit in diesen empfindlichen Bereich geführt werden.

Der Erfindung liegt die Aufgabe zugrunde, ein Verfahren zu schaffen, mit dessen Hilfe Verdrahtungssysteme in örtlich begrenzten Abschnitten gegen Längswasser abgedichtet werden können.

Diese Aufgabe wird durch die im Anspruch 1 angegebene Erfindung gelöst.

Der erfindungsgemäße Bausatz gestattet das Ausüben des erfindungsgemäßen Verfahrens und ermöglicht ein nachträgliches örtliches Abdichten von Verdrahtungen.

Erfindungsgemäß besteht ein solcher Bausatz aus einem in der Wärme auf einen kleineren Durchmesser zurückschrumpfenden, wärmeschrumpfenden Bauteil und einem Kern aus einem in der Wärme auf einen vorübergehend oder bleibend vergrößerten Querschnitt aufquellenden Material, enthaltend einen oder bestehend aus einem thermoplastischen Schmelzkleber, wobei zwischen dem wärmeschrumpfenden Bauteil und dem aufquellenden Kernmaterial ein Raum, vorzugsweise ein Ringraum, zur Aufnahme von Einzellitzen oder Kabelsträngen vorgesehen ist.

Der mit Hilfe der Erfindung (Verfahren und Bausatz) erzielbare Fortschritt ergibt sich in erster Linie daraus, daß nach Einbetten des aufquellenden Kern-Kunststoffelementes, Anordnens des wärmeschrumpfenden Bauteiles sowie nach Durchführen der Wärmebehandlung die Einzellitzen oder Kabelstränge sowohl zwischen einander als auch über den gesamten Querschnitt der Verdrahtung längswasserdicht) (gasdicht) ausgebildet sind, da der thermoplastische Schmelzkleber als Folge des von dem wärmeschrumpfenden Bauteil beim engen Aufschrumpfen auf die Verdrahtung ausgeübten Druckes sowie als Folge des im Inneren der Verdrahtung von dem aufquellenden Kernelement ausgeübten Druckes in alle Hohlräume zwischen den einzelnen Leitersträngen (Einzellitzen und/oder Kabelstränge) eingedrungen ist.

Bei der Durchführung des erfindungsgemäßen Verfahrens wird in die Leiterstränge des Verdrahtungssystems wenigstens ein bei Wärmebehandlung zu einer vergrößerten Querschnittsgestalt aufquellendes Kunststoffelement eingebettet, welches einen thermoplastischen Schmelzkleber enthält oder aus einem (vernetzbaren) Kunststoff besteht. Entscheidend ist, daß dieses Kunststoffelement bei Wärmezufuhr seinen Durchmesser vergrößert und einen inneren Schmelzfluß hervorbringt, der in die Zwischenräume zwischen den einzelnen Leitungensträngen des Kabelbündels eindringt und alle Zwischenräume verfüllt. Es versteht sich, daß durch die in der Wärme auftretende Volumenvergrößerung des einzubettenden Kunststoffelementes eine Drucksteigerung im Inneren der Verdrahtung hervorgerufen wird, die den Schmelzkleber in die abzudichtenden Zwischenräume hineindrückt. Es versteht sich, daß die erfindungsgemäße Abdichtung in einem oder mehreren örtlich definierten Bereichen einer längeren Verdrahtung vorgenommen werden kann, aber das auch beträchtliche Längsabmessungen durchgehend auf erfindungsgemäße Weise längswasserdicht und gasdicht gemacht werden können.

Nach einer bevorzugten Ausführungsform der Erfindung ist das im abzudichtenden Bereich die Verdrahtung umhüllende äußere wärmeschrumpfende Bauteil auf seiner Innenoberfläche mit einem Schmelzkleber beschichtet. Bei der Wärmebehandlung schmilzt diese Schmelzkleberbeschichtung und wird unter den vorstehend erwähnten beiden Druckkomponenten (von innen und von außen) in die Hohlräume des abzudichtenden Abschnittes zwischen den einzelnen Leitersträngen abdichtend hineingedrückt.

Es sei unterstrichen, daß die von innen und von außen auf den abzudichtenden Abschnitt einwirkenden Druckkräfte dadurch hervorgerufen werden, daß im Falle des von außen wirkenden Druckes ein zuvor in Radialrichtung expandiertes, wärmeschrumpfendes Bauteil durch Wärmeeinwirkung auf seinen kleineren Ausgangsdurchmesser zurückschrumpft und daß im Falle des von innen wirkenden Druckes von dem eingebetteten Kunststoffelement bei der Wärmebehandlung als Folge seines Aufquellens, d.h. als Folge seiner vorübergehenden oder bleibenden Querschnittsvergrößerung, ein von innen nach außen gerichteter Druck ausgeübt wird.

Wie bereits erwähnt, sind es diese beiden einander entgegengesetzt gerichteten Druckkomponenten, die den bei der Wärmebehandlung weich gewordenen, thermoplastischen Schmelzkleber in die auszufüllenden Hohlräume drücken.

Die Erfindung umfaßt mehrere unterschiedliche einzubettende Kunststoffelemente, nämlich

a) solche Elemente, die aus einer Seele aus einem vernetzbaren Kunststoff und einer auf diese Seele extrudierten Mantelschicht aus einem thermoplastischen Schmelzkleber bestehen,

b) solche Elemente, die keine Seele aus einem vernetzbaren Kunststoff aufweisen, sondern allein aus einem thermoplastischen Schmelzkleber bestehen, wobei dieser jedoch so eingestellt ist, daß er nach Verstrecken in Längsrichtung bei einer darauffolgenden Wärmebehandlung unter Vergrößerung seines Durchmessers in seine (ungereckte) Ausgestalt zurückkehrt, und

c) solche Elemente, die im wesentlichen aus einem durch Wärmezufuhr aktivierbaren Kleber bestehen, der in der Wärme unter Schaumbildung aufquillt und in alle im Abdichtungsbereich vorhandenen Hohlräume eindringt.

Weitere bevorzugte Ausführungsformen der Erfindung sind in den Unteransprüchen beschrieben.

Die Erfindung wird im folgenden anhand von Ausführungsbeispielen und unter Bezug auf die Zeichnung näher beschrieben. In dieser zeigt:

Fig. 1 eine perspektivische Darstellung eines Abschnittes eines einzubettenden Kunststoffelementes mit einer Seele aus einem vernetzbaren Kunststoff und einer um diese Seele herum extrudierten Mantelschicht aus einem thermoplastischen Schmelzkleber,

Fig. 2 eine perspektivische Darstellung eines einzubettenden Kunststoffelementes aus einem extrudierten, thermoplastischen Schmelzkleber ohne Seele,

Fig. 3 eine perspektivische Darstellung eines einzubettenden Kunststoffelementes mit sich in Längsrichtung erstreckenden Rippen,

Fig 4 eine perspektivische Darstellung eines zusammen mit Kunststoffelementen gemäß Figuren 1 bis 3 verwendbaren weiteren Kunststoffelementes nach einer für eine höhere Anzahl von Leitersträngen geeigneten Ausführungsform der Erfindung,

Fig. 5 eine perspektivische Darstellung eines Abschnittes eines wärmeschrumpfenden Bauteiles mit an der Innenwandung vorgesehener Beschichtung aus einem thermoplastischen Schmelzkleber,

Fig. 6 einen schematischen Querschnitt durch den abzudichtenden Abschnitt einer mit dem erfindungsgemäßen Bausatz versehenen Verdrahtung vor der Wärmebehandlung, wobei in die Mitte des Kabelbündels ein Kunststoffelement gemäß Fig. 1 eingebettet ist,

Fig. 7 einen Querschnitt vor der Wärmebehandlung gemäß Fig. 6 jedoch mit einem in die Mitte der Verdrahtung eingebetteten Kunststoffelement gemäß Fig. 2,

Fig. 8 einen Querschnitt vor der Wärmebehandlung gemäß Fig. 6, wobei jedoch in die Mitte der Verdrahtung ein Kunststoffelement gemäß Fig. 3 eingebettet ist.

Fig. 9 einen Schnitt gemäß Fig. 6, wobei in die Mitte der Verdrahtung ein Kunststoffelement gemäß Fig. 2 eingebettet ist und außerdem zwischen diesem Kunststoffelement und dem äußeren wärmeschrumpfenden Bauteil zwei weitere einzubettende Kunststoffmaterialien mit der in Fig. 4 dargestellten Gestalt vorgesehen sind, vor der Wärmebehandlung,

Fig. 10 einen Schnitt durch ein mit der erfindungsgemäßen Vorrichtung versehenes Kabelbündel der in Fig. 6 dargestellten Art nach erfolgter Wärmebehandlung,

Fig. 11 einen Schnitt durch ein eine erfindungsgemäße Vorrichtung aufweisendes Kabelbündel der in Fig. 9 dargestellten Art nach erfolgter Wärmebehandlung,

Fig. 12 eine schematische Darstellung von aufeinander folgenden Schritten beim Anwenden der Erfindung auf Leiterverbindungen in Form von verlöteten Spleißstellen,

Fig. 13 einen Schnitt durch eine bevorzugte Ausführungsform eines ringförmigen Schmelzkleber-Kernelementes,

Fig. 14 einen Schnitt durch eine andere bevorzugte Ausführungsform eines ringförmigen Schmelzkleber-Kernelementes,

Figuren 15A und 15B schematische Darstellungen einer Längswasserabdichtung zu beiden Seiten einer gelöteten Leiterverbindungsstelle.

Im Rahmen dieser Beschreibung wird der Begriff "Leiterstrang" als Sammelbegriff für "Einzellitzen und/oder Kabelstränge" benutzt.

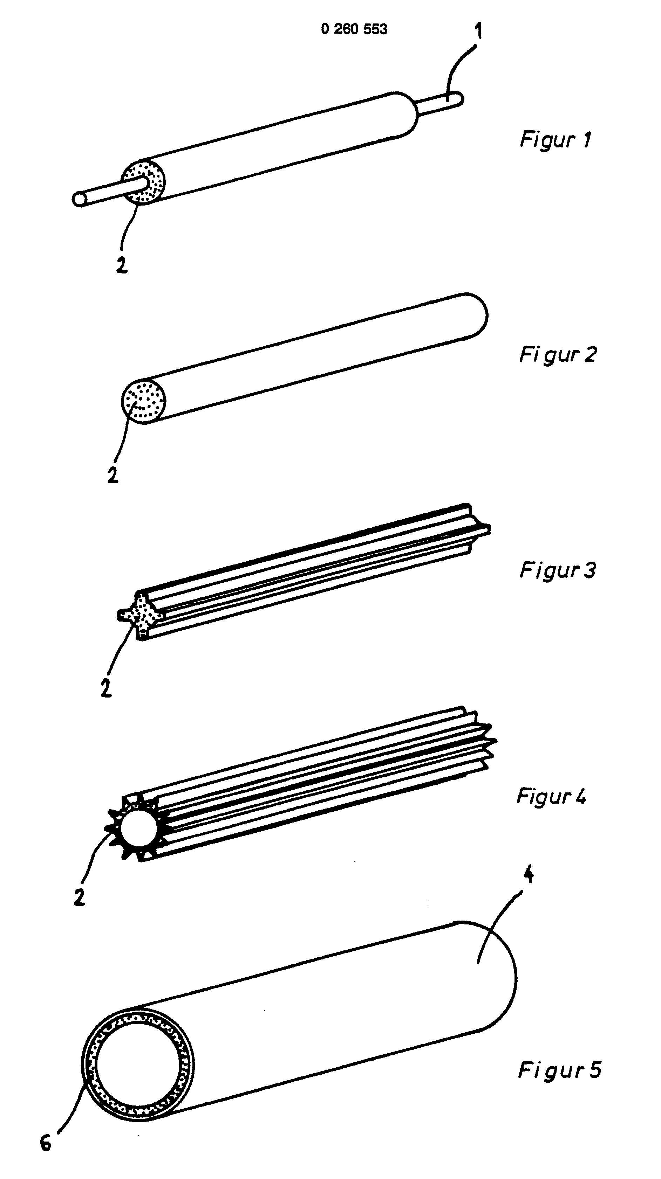

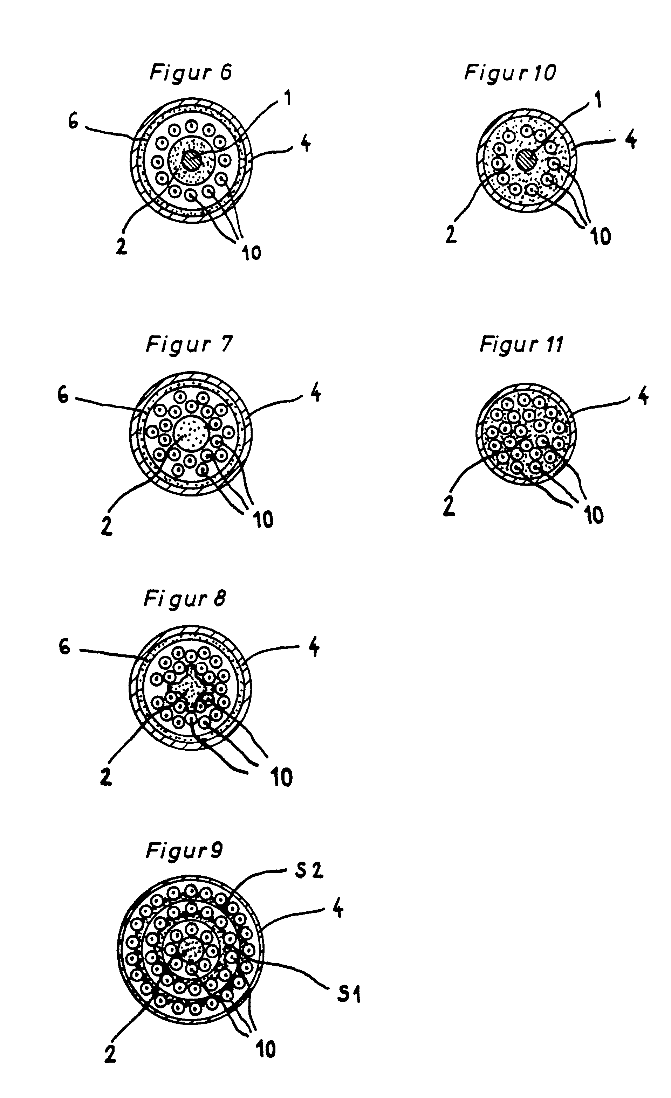

Das in Fig. 1 dargestellte einzubettende Kunststoffelement besteht aus einer Seele 1 aus einem vernetzbaren Kunststoff, beispielsweise einer geeigneten Polyethylen-Mischung und einer darüber extrudierten Mantelschicht aus einem Schmelzkleber 2. In Fig. 6 ist ein solches Kunststoffelement 1, 2 im Inneren eines eine Vielzahl von Kabelsträngen 10 aufweisenden Leiterstranges dargestellt und zwar in einem Zustand vor einer Wärmebehandlung. Fig. 11 zeigt die Situation nach erfolgter Wärmebehandlung.

Nach Extrudierung des thermoplastischen Schmelzklebers 2 über die aus einem vernetzbaren Kunststoff bestehende Seele 1 wird das diese beiden Komponenten umfassende System wenigstens teilweise vernetzt, wozu das Material mit Beta-oder Gamma-Strahlung bestrahlt oder chemisch behandelt wird, wodurch eine Vernetzung der beispielsweise aus Polyethylen bestehenden Seele hervorgerufen wird. Je nach Zusätzen kann dabei auch die Mantelschicht aus dem Schmelzklebers 2 je nach Bedarf mehr oder weniger stark vernetzt werden.

Nach dem Vernetzen von Seele und gegebenenfalls auch Mantelschicht wird das in Fig. 1 dargestellte Element in Richtung seiner Längsachse gereckt. Dieses Recken erfolgt vorzugsweise in einem Streckverhältnis von 2:1, 3:1 oder 4:1, wobei vorzugsweise das Verhältnis aus dem Außendurchmesser der mantelförmigen Schmelzkleberschicht 2 und dem Außendurchmesser der Seele (Polyethylen) 2:1, 3:1 oder 4:1 beträgt.

Die in Fig. 1 dargestellte Seele 1 ist von stabförmiger Gestalt mit rundem Querschnitt. Die darauf extrudierte Schmelzkleberschicht 2 besitzt demzufolge eine kreisringförmige Querschnittsgestalt.

Zum örtlichen Abdichten einer vieladrigen Verdrahtung wird ein, wie vorstehend beschrieben, (teil)-vernetztes und in Längsrichtung gerecktes Kunststoffelement in eine Verdrahtung, vorzugsweise in der Längsachse desselben, angeordnet, so daß sich die Leiterstränge rings um die Außenfläche der ringförmigen Schmelzkleberschicht 2 verteilen, wie in Fig. 6 dargestellt. Sodann wird auf das Verdrahtungssystem ein in Radialrichtung aufgeweitetes und gegebenenfalls vernetztes wärmeschrumpfendes Bauteil aufgeschoben. Bei einer anschließenden Wärmebehandlung, die im Rahmen der vorliegenden Erfindung im Temperaturbereich von 80 bis 155 °C, gemessen innerhalb der Abdichtstelle, durchgeführt wird, wird der thermoplastische Schmelzkleber 2 aktiviert und tritt bei dem vorgestreckten, wärmeschrumpfenden Bauteil ein Rückschrumpfen in Richtung des ursprünglichen kleineren Durchmessers ein. Ferner erfolgt bei dieser Wärmebehandlung eine Rückkehr der längsverstreckten Seele 1 in Richtung auf ihren früheren größeren Durchmesser, so daß im Raum zwischen dem äußeren wärmeschrumpfenden Bauteil 4 und dem Eleemnt 1,2 ein Druckanstieg auftritt, der den weichgewordenen Schmelzkleber 2 in die Zwischenräume zwischen den einzelnen Leitersträngen 10 drückt.

Gemäß Fig. 2 weist das einzubettende Kunststoffelement keine Mittelseele auf, sondern besteht gänzlich aus einem thermoplastischen Schmelzkleber. Dieser Schmelzkleber ist so eingestellt bzw. so vernetzt, daß nach einer Streckung in Längsrichtung und einer nachfolgenden Erwärmung ein Rückschrumpfen zu einer vorübergehend oder bleibend vergrößerten Querschnittsgestalt eintritt. Vorzugsweise wird ein Schmelzkleber verwendet, der bei Erhitzung unter Bildung geschlossener Poren aufschäumt.

Das einzubettende Kunststoffelement gemäß Fig. 2 wird in der anhand von Fig. 1 beschriebenen Weise bei seiner Verwendung im abzudichtenden Abschnitt eines Bündels von Leitersträngen eingebettet und nach Aufschieben eines wärmeschrumpfenden Bauteils in der anhand von Fig. 1 beschriebenen Weise einer Wärmebehandlung unterworfen. Da der vorgestreckte Kunststoffkörper gemäß Fig. 2 bei der Wärmebehandlung in seine vor dem Verstrecken eingenommene Gestalt zurückkehrt, vergrößert sich bei der Wärmebehandlung der Durchmesser des Kunststoffkörpers, was innerhalb des von dem wärmeschrumpfenden Bauteil 4 umschlossenen Abschnitts der Verdrahtung einen von innen nach außen gerichteten Druck hervorruft, der den erweichten Schmelzkleber in die Zwischenräume zwischen den Leitersträngen 10 drückt.

Das Verstrecken des einzubettenden Kunststoffelementes gemäß Fig. 2 erfolgt vorzugsweise, wie anhand von Fig. 1 beschrieben, also im Verhältnis von 2:1, 3:1 oder 4:1. Aufschäumende Schmelzkleber werden nicht verstreckt.

In Fig. 7 ist dargestellt, wie ein seelenloses Kunststoffelement gemäß Fig. 2 im Inneren eines Bündels von Leitersträngen und zwar im Verlauf der Längsachse desselben angeordnet ist. Zwischen diesem Schmelzkleber 2 und dem äußeren wärmeschrumpfenden Bauteil 4 sind die einzelnen Leiterstränge 10 angeordnet. Fig. 7 zeigt das Ensemble aus wärmeschrumpfendem Bauteil 4, Leitersträngen 10 und zentral angeordnetem Kunststoffelement 1 vor der abschließenden Wärmebehandlung. In den Figuren 3 und 4 sind gleichfalls keine Seele aufweisende einzubettende Kunststoffelemente aus einem vernetzbaren, thermoplastischen Schmelzkleber oder einem in der Wäme vorübergehend oder bleibend aufschäumenden Schmelzkleber dargestellt. Gemäß Fig. 3 besitzt das Kunststoffelement einen etwa malteserkreuz-förmigen Querschnitt mit vier zwischen den Kreuzarmen ausgebildeten, in Element-Längsrichtung verlaufenden Aufnahmen in Form von Nuten oder Riefen. In diesen Aufnahmen können ein Leiterstrang oder mehrere Leiterstränge eingelegt werden. Auch sternförmige Querschnitte sind sehr geeignet. Fig. 8 zeigt im Bereich der Längsachse einer vieladrigen Verdrahtung ein kreuzförmiges Kunststoffelement gemäß Fig. 3, wobei in jeder der vier Aufnahmen jeweils zwei Leiterstränge 10 angeordnet sind. Eine Vielzahl weiterer Leiterstränge umringt gemäß Fig. 8 die in den vier Aufnahmen aufgenommenen Kabelstränge.

Fig. 4 zeigt ein als Hohlkörper ausgebildetes, in eine Verdrahtung einzubettendes Kunststoffelement mit einer Vielzahl von in Längsrichtung auf der Oberfläche des Ringkörpers ausgebildeten, in Längsrichtung verlaufenden Aufnahmetaschen für wenigstens einen Leiterstrang. Das in Fig. 4 dargestellte Kunststoffelement besteht aus einem vernetzbaren, thermoplastischen Schmelzkleber oder einem bei Erwärmung aufschäumenden Schmelzkleber und kann vor seiner Verwendung in der gleichen Weise vernetzt und in Längsrichtung verstreckt werden, wie anhand der Figuren 2 und 3 beschrieben. Es sei unterstrichen, daß die Aufnahmetaschen vorzugsweise so dimensioniert sind, daß nicht mehr als zwei Leiterstränge darin Platz haben.

Die Verwendung des Kunststoffelementes (Schmelzkleberelementes) gemäß Fig. 4 ist in Fig. 9 veranschaulicht. Z.B. dient das Kunststoffelement gemäß Fig. 4 zum Abdichten (längswasserdicht und gasdicht) von eine große Vielzahl von Leitersträngen aufweisenden Verdrahtungen. Gemäß des in Fig. 9 dargestellten Ausführungsbeispiels sind acht Leiterstränge um einen in der Längsachse der dargestellten Verdrahtung verlaufenden Kern aus einem Schmelzkleber 2 angeordnet. Auf diese acht Kabelstränge ist ein Hohlkörper gemäß Fig. 4 aufgeschoben, der in seiner Vielzahl von in Längsrichtung sich erstreckenden Aufnahmen eine Vielzahl weiterer Leiterstränge aufnimmt. Dieser Hohlkörper ist in Fig. 9 mit dem Bezugszeichen S1 bezeichnet. Außerhalb des Hohlkörpers S1 und der in diesem Hohlkörper angeordneten Leiterstränge ist ein weiterer Hohlkörper der in Fig. 4 dargestellten Gestaltung angeordnet. Dieser weitere Hohlkörper ist in Fig. 9 mit dem Bezugszeichen S2 bezeichnet und besitzt einen größeren Durchmesser als der Hohlkörper S1. Wie in allen bereits beschriebenen Ausführungsbeispielen ist wenigstens außen auf die äußerste Leiterlage ein wärmeschrumpfendes Bauteil 4 geschoben. Vorzugsweise erfolgt der Aufbau einer Anordnung gemäß Fig. 9 sukzessiv unter Verwendung von "zwischen"-wärmeschrumpfenden Bauteilen, die in Fig. 9 nicht dargestellt sind.

Wird ein Ensemble gemäß Fig. 9 einer Wärmebehandlung unterzogen, so führt die Wärmeaktivierung der vorgestreckten bzw. aus aufschäumendem Material bestehende Schmelzkleberelemente 2, S1 und S2 zusammen mit dem Zurückschrumpfen des äußeren wärmeschrumpfenden Bauteiles 4 sowie der vorzugsweise verwendeten (nicht dargestellten) "zwischen"-wärmeschrumpfenden Bauteile zu einer solchen Druckerhöhung im Innenraum des betreffenden Verdrahtungsabschnitts, daß die bei der Wärmebehandlung schmelzflüssig gewordenen Schmelzkleber in alle Hohlräume innerhalb der wärmeschrumpfenden Bauteile eindringen. Der Zustand nach der Wärmebehandlung bei einem Ausführungsbeispiel gemäß Fig. 9 ist in Fig. 11 dargestellt; "zwischen"-wärmeschrumpfende Bauteile sind in der Zeichnung nicht zu erkennen. Um zu hohen Verarbeitungstemperaturen zu vermeiden, ist ihre Verwendung bei sukzessiver Rückschrumpfung jedoch bevorzugt.

Mit Hilfe von Schmelzklebelementen und der jeweils dazu passenden wärmeschrumpfenden Bauteile der in Fig. 4 dargestellten Gestalt können nach Belieben eine Vielzahl von kreisförmigen Leiterlagen jeweils unterschiedlichen Durchmessers aufgebaut werden.

In Fig. 5 ist ein an sich bekanntes wärmeschrumpfendes Bauteil 4 dargestellt. Wärmeschrumpfende Bauteile gelangen in der Regel im bereits vorgestreckten Zustand in den Handel und - schrumpfen nach einer Wärmebehandlung in ihre vor dem Verstrecken innengehabte Gestalt zurück. Die Verformung, aus welcher ein solches wärmeschrumpfendes Bauteil bei der Wärmebehandlung in seine Ausgangsgestalt zurückkehrt, kann einem Schrumpfschlauch auch erst beim Aufschieben auf die Außenoberfläche eines Kabelbündels erteilt werden.

Das in den Figuren 5, 6, 7 und 8 dargestellte wärmeschrumpfende Bauteil 4 ist gemäß einer bevorzugten Ausführungsform der Erfindung mit einer inneren Beschichtung 6 aus einem thermoplastischen Schmelzkleber versehen. Diese Schmelzkleberschicht 6 erweicht bei der abschließenden Wärmebehandlung und dringt von außen her in die Zwischenräume zwischen den Leitersträngen ein (zusätzlich zu den aus dem Inneren der Verdrahtung nach außen vordringenden Kleber-Schmelzflüssen).

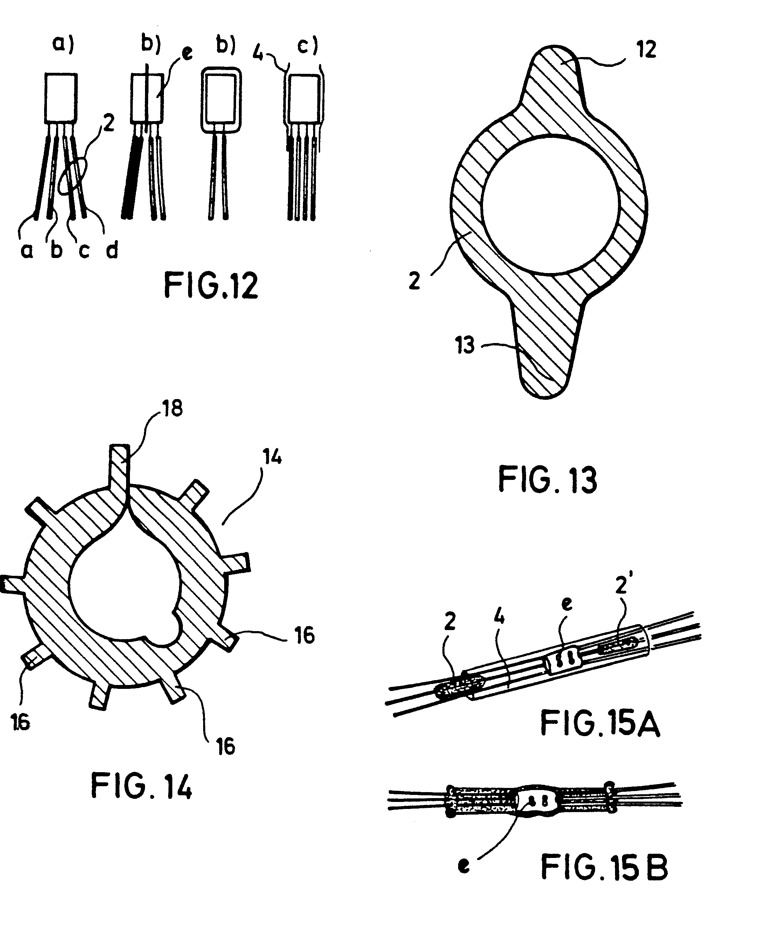

Die Gesamtheit der vorstehend beschriebenen einzubettenden Schmelzkleberelemente, ob mit oder ohne Seele, kann als unprofilierter Rundstab (Figuren 1 und 2) wie auch als Profil-Vollkörper gemäß Fig. 3 und auch als profilierter Hohlkörper gemäß Fig. 4 gestaltet sein. Weitere einzubettende Schmelzkleberelemente sind in den Figuren 13, 14 und 15 dargestellt. Für alle Ausführungsformen gilt, daß der von außen wirkende Druck durch das Rückschrumpfen eines vorgestreckten wärmeschrumpfenden Bauteils hervorgerufen wird und daß der von innen nach außen wirkende Druck durch die Rückorientierung bzw. Rückschrumpfung eines in Längsrichtung vorgereckten Materials bzw. durch das Aufquellen eines durch Wärmezufuhr aufschäumenden Schmelzklebers hervorgerufen wird.

Im letzteren Falle wird als Werkstoff ein sich bei der Wärmebehandlung zu einem vergrößerten Durchmesser bzw. zu einer vergrößerten Querschnittsgestalt aufquellender, wärmeaktivierbarer Schmelzkleber verwendet, der bei der Erwärmung vorübergehend oder bleibend aufschäumt und dabei geschlossene Poren bildet. Die auf der Innenoberfläche des wärmeschrumpfenden Bauteils 4 in Fig. 5 vorgesehene Schmelzkleberschicht 6 besteht vorzugsweise aus einem solchen Schmelzkleber, der bei Erwärmung aufschäumt und dabei geschlossene Poren bildet.

Durch das im Rahmen der Erfindung durch die Wärmebehandlung hervorgerufene Aufquellen des Schmelzklebers, sei es durch ein Rückschrumpfen auf eine frühere Querschnittsgestalt oder durch das Aufschäumen im Falle von verschäumbaren Schmelzklebern, wird im Zusammenwirken mit dem bei der gleichen Wärmebehandlung hervorgerufenen Rückschrumpfen des äußeren wärmeschrumpfenden Bauteils im Inneren des Kabelbündels ein Schmelzfluß hervorgerufen, der die einzelnen Leiterstränge der Verdrahtung gasdicht und längswasserdicht abdichtet.

Der erfindungsgemäße Bausatz ist in den Figuren 6 bis 9 vor der Wärmebehandlung und in den Figuren 10 und 11 nach der Wärmebehandlung dargestellt.

Dieser Bausatz umfaßt ein in der Wärme auf einen kleineren Durchmesser zurückschrumpfbares, wärmeschrumpfendes Bauteil 4 und einen Kern aus einem durch Wärmebehandlung auf einen vorübergehend oder bleibend vergrößerten Querschnitt aufquellendem Material, bestehend aus oder enthaltend einen thermoplastischen Schmelzkleber. Gemäß Fig. 6 kann dieser Kern aus einer Seele 1 aus einem vernetzbaren Kunststoff und einem die Seele umgebenden Mantel aus einem thermoplastischen Schmelzkleber 2 bestehen. Gemäß Fig. 7 besteht dieser Kern lediglich aus einem thermoplastischen, vorzugsweise aufschäumenden Kunststoff 2. Die Kerne gemäß Figuren 6 und 7 besitzen eine kreisförmige Querschnittsgestalt.

Der in Fig. 8 dargestellte Kern besitzt eine malteserkreuzförmige Querschnittsgestalt, wobei die Zwischenräume zwischen den vier Kreuzarmen als Aufnahmen für Einzellitzen und/oder Kabelstränge ausgebildet sind. Es können auch sternförmige Querschnittskonfigurationen mit beispielsweise fünf Zacken benutzt werden.

Bei dem in Fig. 6 dargestellten Bausatz ist das System aus Seele 1 und thermoplastischen Schmelzkleber 2 wenigstens teilweise vernetzt. Nach dem Vernetzen werden Seele und Klebstoff-Mantelschicht gemeinsam in Längsrichtung verstreckt. Hinsichtlich von Einzelheiten wird auf die diesbezügliche Beschreibung in Verbindung mit dem erfindungsgemäßen Verfahren verwiesen.

Die in den Figuren 7 und 8 dargestellten Kerne können aus einem thermoplastischen Schmelzkleber bestehen, der so eingestellt oder so vernetzt worden ist, daß nach einer Reckung in Längsrichtung bei einer nachfolgenden Erwärmung ein Rückschrumpfen auftritt. Vorzugsweise bestehen die Kerne jedoch aus einem bei Wärmeeinwirkung aufquellenden, verschäumbaren Material.

Zwischen dem äußeren wärmeschrumpfenden Bauteil und dem Kern ist ein Raum zur Aufnahme der eine Vielzahl von Leitersträngen 10 aufweisenden Verdrahtung vorgesehen.

Der erfindungsgemäße Bausatz wird wie folgt benutzt:

In der in den Figuren 6, 7 und 8 dargestellten Weise wird eine Vielzahl von Leitersträngen 10 zwischen dem Kern und dem äußeren wärmeschrumpfenden Bauteil möglichst gleichmäßig verteilt angeordnet. Durch eine Wärmebehandlung im Temperaturbereich von 80 bis 155 °C, gemessen innerhalb der Abdichtstelle, schrumpft das äußere wärmeschrumpfende Bauteil 4 von seinem vergleichsweise großen Durchmesser gemäß Figuren 6 bis 9 auf einen vergleichsweise kleinen Durchmesser gemäß Figuren 10 und 11, so daß das wärmeschrumpfende Bauteil eine von außen nach innen wirkende Kraft ausübt. Gleichzeitig erfolgt bei dieser Wärmebehandlung ein Aufquellen des inneren Kernes zusammen mit einem Aufschmelzen des den Kern zumindest teilweise bildenden thermoplastischen Schmelzklebers. Wie bereits erwähnt, besteht der Kern in den Figuren 7 und 8 lediglich aus einem Schmelzkleber während der Kern gemäß Fig. 6 aus einem Schmelzkleber 2 und einer mittigen Seele 1 besteht. Das Aufquellen der Kerne bei der Wärmebehandlung kann darauf beruhen, daß das die Kerne bildende Material zuvor teilweise vernetzt und anschließend in Längsrichtung gestreckt wurde. Bei der Wärmebehandlung kehrt das verstreckte Material in seine Ausgangsgestalt (vor dem Verstrecken) zurück, was mit einer Querschnittsvergrößerung im Falle im wesentlichen stabförmiger Kerne verbunden ist, was wiederum zur Folge hat, daß der bei der Wärmebehandlung flüssig gewordene Schmelzkleber in alle gegebenenfalls vorhandenen Hohlräume eindringt.

Anstelle eines vernetzten und verstreckten Materials für den Kern kann ein Material verwendet werden, welches bei der Wärmebehandlung vorübergehend oder bleibend verschäumt und unter Bildung geschlossener Poren in alle Hohlräume im Inneren des äußeren wärmeschrumpfenden Bauteiles eindringt.

Gemäß einer in Fig. 9 dargestellten Ausführungsform des Bausatzes sind zwischen dem äußeren wärmeschrumpfenden Bauteils 4 und dem mit dem Bezugszeichen 2 bezeichneten Innenkern, der im Verlauf der Längsachse der Verdrahtung angeordnet ist, zwei ringförmigen Schmelzkleberelemente angeordnet, wobei das innere mit dem Bezugszeichen S1 und das äußere mit dem Bezugszeichen S2 bezeichnet sind. Diese beiden ringförmigen Schmelzkleberelemente von unterschiedlichem Durchmesser sind auf ihren Außenoberflächen mit einer Vielzahl von nebeneinander angeordneten Aufnahmen versehen, die sich in Längsrichtung erstrecken. Diese Aufnahmen können durch nutenförmige Vertiefungen im Werkstoff gebildet sein oder durch das Ausbilden von umfangsmäßig beabstandeten, vorspringenden Leisten, zwischen welchen sich Aufnahmetaschen ausbilden.

Diese beiden ringförmigen Körper S1 und S2 sind in der gleichen Weise hergestellt und haben die gleichen Eigenschaften wie die vorstehend unter Bezug auf Fig. 7 und 8 beschriebenen Kerne. Sie bestehen folglich entweder aus einem vernetzbare, thermoplastischen Schmelzkleber, der so eingestellt oder so vernetzt ist, daß nach einer Längsreckung und einer nachfolgenden Erwärmung ein Rückschrumpf auftritt, oder sie bestehen aus einem Werkstoff, der bei Erwärmung vorübergehend oder bleibend aufschäumend aufquillt und alle Hohlräume ausfüllt.

Wie bereits erwähnt, führt der Bausatz gemäß Fig. 6 (dort vor der Wärmebehandlung dargestellt) nach der Wärmebehandlung zu einem in Fig. 10 im Schnitt dargestellten Abdichtungsbereich einer vieladrigen Verdrahtung. Es ist deutlich zu erkennen, daß der Schmelzkleber 2 den gesamten Raum zwischen der Seele 1 und dem wärmeschrumpfenden Bauteil mit Ausnahme der Kabelstränge 10 dichtend erfüllt.

Der Bausatz gemäß Fig. 9 ist von Vorteil besonders für Verdrahtungen mit einer beträchtlichen Anzahl von einzelnen Leitersträngen. In Fig. 9 sind 45 einzelne Leiterstränge 10 dargestellt (vor der Wärmebehandlung). Fig. 11 zeigt, daß nach der Wärmebehandlung die seelenlosen Bausätze gemäß Figuren 7, 8 und 9 zu einem Abdichtungsabschnitt führen, in welchem die Räume zwischen den einzelnen Leitersträngen und dem äußeren wärmeschrumpfenden Bauteil 4 vollständig von dem erstarrten (vernetzten) Schmelzkleber 2 ausgefüllt sind. Wie schon erwähnt, werden vorzugsweise "zwischen"-wärmeschrumpfende Bauteile auf die in den Elementen S1 und S2 aufgenommenen Leiterbündel aufgeschrumpft.

Vorteilhafterweise kann die Innenoberfläche des äußeren wärmeschrumpfenden Bauteils 4 mit einer Beschichtung 6 aus einem thermoplastischen Schmelzkleber beschichtet sein. Bei diesem Schmelzkleber der Innenbeschichtung 6 kann es sich um ein Material handeln, welches bei Erwärmung vorübergehend oder bleibend aufschäumt und dabei geschlossene Poren bildet. Bevorzugt wird für die Innenbeschichtung 6 ein gleiches oder ähnliches Material benutzt wie für die beim Schmelzen aufquellenden Schmelzkleberkörper (Kerne).

Ein besonders interessantes Anwendungsgebiet für das Verfahren und den Bausatz nach der Erfindung bilden Verdrahtungssysteme mit einer Vielzahl von an ihren Enden miteinander verlöteten elektrischen Leitern (Einzellitzen). Fig. 12(a) zeigt ein solches auch als "Spleißstelle" bezeichnete Verdrahtung, bei welcher vier jeweils isolierte Einzeladern im Bereich ihrer Enden miteinander verlötet und/oder mit einem Crimp versehen sind. Die Einzeladern sind mit a, b, c und d bezeichnet. Es versteht sich, daß derartige Verbindungen äußerst korrosionsgefährdet sind. Um eine solche Spleißstelle längswasserdicht auszubilden, werden die elektrischen Leiter in zwei Gruppen mit möglichst gleicher Anzahl oder gleichem Gesamtquerschnitt gebündelt. Zuvor wird ein ringförmiges Kunststoffelement, welches aus einem Schmelzkleber 2 besteht oder einen solchen Schmelzkleber enthält, über eines der Leiterbündel geführt, wie in Fig. 12(a) schematisch dargestellt. Wie in Fig. 12(b) dargestellt, wird das ringförmige Kunststoffelement (Heißschmelzkleberring) in Längsrichtung über den Crimp des Lötstützpunktes e geführt, wobei der Durchmesser des ringförmigen Elementes so gewählt wird, daß das ringförmige Element fest auf dem Crimp sitzt.

Fig. 12(b $^1$) erläutert die Darstellung gemäß Fig. 12(b) in einer Seitenansicht.

Abschließend wird ein wärmeschrumpfendes Bauteil 4 über die Anordnung geschoben, und wird durch eine Wärmebehandlung das Rückschrumpfen des wärmeschrumpfenden Bauteiles sowie das Aufquellen des ringförmigen Kunststoffelementes herbeigeführt, bis schmelzflüssiggewordener Kleber gleichmäßig bis an die Enden des wärmeschrumpfenden Bauteiles verläuft.

In Fig. 12 ist das ringförmige Kunststoffelement 2, welches wenigstens teilweise aus einem thermoplastischen Schmelzkleber besteht, der bei Erwärmung aufschäumt und dabei geschlossene Poren bildet, lediglich schematisch dargestellt.

Fig. 13 zeigt eine bevorzugte Ausführungsform eines solchen ringförmigen Schmelzkleberelementes 2. Diese Ausführungsform des Schmelzkleberringes besitzt einen oberen Vorsprung 12, der das Handhaben des Ringes erleichtert. Ferner besitzt der Schmelzkleberring eine dem Handhabungsvorsprung 12 gegenüberliegende Nase 13, die einen Schmelzklebervorrat bildet. Mit Blick auf Fig. 12 wird man das in Fig. 13 dargestellte ringförmige Schmelzkleberelement so anordnen, daß die Nase 13 in demjenigen Bereich angeordnet ist, in welchem die abisolierten Enden der Leiter a, b, c und d in die Lötstelle bzw. den Crimp münden. Mithin ist durch den nasenförmigen Vorsprung 13 dafür Sorge getragen, daß in dem Bereich, wo eine Vielzahl von Leitern vorliegt, eine entsprechend große Menge an Schmelzklebermaterial vorliegt.

Anstelle des bei Fig. 12 (c) beschriebenen wärmeschrumpfenden Bauteiles kann bei Endverschlüssen auch eine Schrumpfkappe Verwendung finden, z.B. ein wärmeschrumpfendes Bauteil mit bereits einseitig geschlossenem Ende.

Fig. 14 zeigt eine bevorzugte Ausführungsform eines rohrförmigen Schmelzkleberelementes mit einer Vielzahl von über den Außenumfang verteilten Aufnahmetaschen 14. Im dargestellten Ausführungsbeispiel sind neun derartige Aufnahmetaschen 14 vorgesehen. Je nach Bedarf kann die Anzahl der Aufnahmetaschen 14 vergrößert oder verkleindert werden. Wie bereits erörtert, werden vorzugsweise nur zwei Einzellitzen oder dgl. in jeder Aufnahmetasche 14 angeordnet, so daß sichergestellt ist, daß sich stets nicht mehr als zwei Einzellitzen oder dgl. gegenseitig berühren. Auf diese Weise wird sichergestellt, daß nicht etwa zwischen benachbarten Litzen oder Kabeln Hohlräume übrigbleiben, in welche der Schmelzkleber nicht eindringen könnte. Beispielsweise bei einer Dreieckskonfiguration von drei benachbart verlaufenden Leitern oder Drähten würde in der Mitte ein nach außen nach abgeschlossener Hohlraum übrigbleiben, der eine äußerst nachteilige Feuchtigkeitsbrücke bilden würde. Die Taschen 14 sind durch Materialvorsprünge 16, die radial aus der Außenoberfläche des ringförmigen Schmelzkleberelementes vorstehen, voneinander getrennt. Um auf einfache Weise zu ermöglichen, daß das in Fig. 14 dargestellte ringförmige Element an einer beliebigen Stelle einer Verdrahtung angeordnet werden kann, ist das ringförmige Element längs einer Teilungslinie 18 unterteilt. Dank dieser Unterteilung kann das in Fig. 14 dargestellte Element leicht geöffnet werden, um weitere Leiter-oder Kabelstränge in seinem Innenraum aufzunehmen. Beispielsweise können ein oder zwei, vorzugsweise dickere, Kabelstränge durch den Innenraum verlaufen. Vorteilhafterweise ist in dem ringförmigen Element gemäß Fig. 14 eine örtliche Schwachstelle vorgesehen, die das Öffnen des Ringes entlang der Teilungsebene 18 erleichtert. Gemäß Fig. 14 ist ein Bereich der Ringwandung zu diesem Zwecke dünner ausgebildet.

Eine weitere, nicht in der Zeichnung dargestellte Ausführungsform der erfindungsgemäßen Schmelzkleberkerne hat einen teilringförmigen Querschnitt, wobei ein Sektor des Ringes fehlt. Ein solcher Teilring wird gerne als U-Profil bezeichnet. Er gestattet ein leichtes Einführen eines solchen Schmelzkleberkerns in eine Verdrahtung. Würde man einen geschlossenen Ring verwenden, so wäre es erforderlich, die Bestandteile der Verdrahtung durch die Ringöffnung hindurchzuziehen. Sowohl bei der Ausführungsform gemäß Fig. 14 als auch bei dem (nicht dargestellten) U-förmig gestalteten Heißkleberkern können Bestandteile der Verdrahtung mühelos in den Innenraum des Ringes (Teilringes) eingebracht werden.

Die Figuren 15A und 15B zeigen eine besondere Ausführungsform der Erfindung, welche zwei Heißkleberkerne verwendet. Diese Kerne 2,2′ bestehen entweder ganz oder teilweise aus einem Schmelzkleber, der bei Erwärmung vorübergehend oder bleibend aufschäumt und geschlossene Poren bildet. Die Schmelzkleberker ne 2,2′ besitzen eine etwa U-förmige Querschnittsgestalt, so daß sie mühelos auf jeweils eine Einzellitze aufgeschoben werden können. In Fig. 16 dient das erfindungsgemäße Verfahren bzw. der erfindungsgemäße Bausatz zum Längswasserabdichten einer Leiterverbindung, durch welche drei von links kommende elektrische Leiter mit drei nach rechts abgehenden Leitern verbunden werden. Die mechanische Verbindung zwischen den jeweiligen Leitern ist mit Hilfe eines Lötpunktes und eines Crimps e herbeigeführt. Um auf den beiden Seiten des Crimps e einen längswasserdichten Bereich auszubilden, ist jeweils auf die mittlere Einzellitze je ein Schmelzkleber-U-Profil 2,2′ aufgeschoben. Sodann wird, wie dargestellt, ein vernetztes und vorgerecktes wärmeschrumpfendes Bauteil 4 aufgeschoben. Durch Wärmeeinwirkung schrumpft das Bauteil 4 zurück, und quillt das Material der Schmelzkleberkerne 2,2′ unter Aufschäumen auf. Wenn das Schmelzklebermaterial aus den beiden Endbereichen des Schrumpfschlauches austritt, wie in Fig. 15B dargestellt, ist die Wärmebehandlung beendet. Wie Fig. 15B erkennen läßt, hat an den einzelnen Litzen von außen in Richtung auf die Lötverbindung herankommendes Längswasser keine Chance in den auf erfindungsgemäße Weise längswasserdicht gemachten Bereich einzudringen. Als Folge des äußeren wärmeschrumpfenden Bauteiles vermag auch von außen keine Feuchtigkeit zur Lötstelle bzw. zum die Lötstelle überlagernden Crimp e zu gelangen.

Als Material für die wärmeschrumpfenden Bauteile ist erfindungsgemäß Ethylen-Vinylacetat-Copolymer (EVA) bevorzugt, weil die Vernetzung dieses Werkstoffes verhältnismäßig leicht steuerbar ist. Die bei wärmeschrumpfenden Bauteilen während des Schrumpfens von außen nach innen, d.h. in Richtung von der Außenoberfläche zum Kern, ausgeübte Kraft ist größer als die vom inneren der Abdichtungsstelle, d.h. vom Schmelzkleberkern nach außen gerichtete Kraft. Das durch die Schrumpfung des wärmeschrumpfenden Bauteiles beaufschlagte schmelzflüssige Klebermaterial fließt in Längsrichtung der Litzen oder Kabelstränge, wobei im wesentlichen Volumenkonstanz zwischen der Situation vor dem Schrumpfen und der Situation nach dem Schrumpfen herrscht. Die durch das Schrumpfen ausgeübte Kraft ist im übrigen über die Wanddicke des Materials steuerbar. Dieses gilt insbesondere für aus Polyethylen (PE) bestehende Schrumpfschläuche.

Je nach beabsichtigter Verwendung werden die Bestandteile der erfindungsgemäßen Bausätze in geeigneter Weise ausgewählt. So ist bei zu erwartenden Einsatztemperaturen von nicht mehr als 85 °C, beispielsweise im Karosseriebereich von Kraftfahrzeugen, ein thermoplastischer Schmelzkleber mit Schmelztemperaturen von 90 bis 95 °C geeignet, beispielsweise Polyamid. Sind die zu erwartenden Einsatztemperaturen höher, beispielsweise 105 °C, d.h. beispielsweise im Motorraum von Kraftfahrzeugen, so werden Schmelzkleber mit höherer Viskosität verwendet. Die gewünschte Viskosität läßt sich durch die dem Material erteilte Vorvernetzung recht gut steuern. So kann beispielsweise ein aus EVA bestehendes vorvernetztes Schmelzklebermaterial mit einem aus PE bestehenden wärmeschrumpfenden Bauteil kombiniert werden.

Für noch höhere Temperaturen von beispielsweise 125 °C werden geeignete Materialien mit noch gesteigerter Vernetzung zwecks gesteigerter Viskosität verwendet.

Zur Durchführung des erfindungsgemäßen Verfahrens und zur Herstellung der erfindungsgemäßen Vorrichtung bzw. des erfindungsgemäßen Bausatzes zum Herstellen jener Vorrichtung können als vernetzbarer Kunststoff alle Materialien verwendet werden, die durch Elektronenbestrahlung (Beta-oder Gamma-Strahlung) oder chemisch wenigstens teilweise vernetzen. Als Beispiele seien genannt: Polyethylen LLDPE, LDPE und HDPE; Polyamid PA; Polyvinylidenfluorid PVDF; Polyvinylchlorid PVC oder Mischungen solcher Kunststoffe.

Der Kristallitschmelzpunkt thermoplastischer Schmelzkleber liegt überwiegend im Temperaturbereich von etwa 60 bis 125 °C. Die Verarbeitungstemperatur von wärmeschrumpfenden Bauteilen liegt im Temperaturbereich von etwa 80 bis 155 °C, gemessen innerhalb der Abdichtstelle.

Als vernetzbarer Kunststoff für die Seele des einzubettenden Kunststoffelementes nach der Erfindung wird Polyethylen als Werkstoff bevorzugt. Für die auf eine solche Polyethylen-Seele aufgebrachte Mantelschicht aus einem thermoplastischen Schmelzkleber wird ein Material auf Polyamid-Basis bevorzugt. Für die erfindungsgemäß einzubettenden Kunststoffelemente ohne Seele wird als thermoplastischer Schmelzkleber Ethylen-Vinylacetat-Copolymer (EVA) bevorzugt.

Als bei Wärmezufuhr unter Bildung geschlossener Poren aufschäumende Schmelzkleber werden endotherme Treibmittel bevorzugt, die bei etwa 140 °C welbstnukleierend unter Schaumbildung zerfallen. Als Beispiel für solche Treibmittel sei das von der Firma Boehringer-Ingelheim unter Bezeichnung "Hydrocerol" vertriebene Treibmittel genannt.

In den Bausätzen nach der Erfindung sind die wärmeschrumpfenden Bauteile ca. drei- bis viermal so lang wie die Kerne (vor der Verwendung). So werden Kerne mit Vollrundquerschnitt (Fig. 2) vorzugsweise mit Vertiefungen in der Außenoberfläche mit Durchmessern von 3 bis 8 mm, in Längsabmessungen von ca. 10 mm, verwendet. die zugehörigen wärmeschrumpfenden Bauteile sind (vor dem Schrumpfen) 35 bis 45 mm lang.

Rundkörper-Hohlprofile (Fig. 4) haben bevorzugt Durchmesser ab 10 mm aufwärts und Längsabmessungen von 10 bis 25 mm. Die zugehörigen wärmeschrumpfenden Bauteile sind (vor dem Schrumpfen) 35 bis 75 mm lang.

Die bevorzugten Schrumpfschläuche haben vor dem Schrumpfen einen Durchmesser von ca. 10 mm aufwärts und nach dem Schrumpfen einen Durchmesser von 2 mm aufwärts. Die Schrumpfrate beträgt bevorzugt 4:1 bei einer Wandstärke nach dem Schrumpfen von z.B. 2,2 mm.

## Ansprüche

1. Verfahren zum Ausbilden definierter längswasserdichter Bereiche in eine Vielzahl von Einzellitzen und/oder Kabelsträngen aufweisenden Verdrahtungen,
dadurch **gekennzeichnet,**
daß zwischen die Einzellitzen und/oder die Kabelstränge der Verdrahtungen wenigstens ein bei Erwärmung zu einer vorübergehend oder bleibend vergrößerten Querschnittsgestalt aufquellendes Kunststoffelement, enthaltend einen oder bestehend aus einem thermoplastischen Schmelzkleber, eingebettet wird und daß im Bereich des abzudichtenden Abschnittes auf den Außenumfang der Verdrahtungen ein Radialrichtung vorgerecktes wärmeschrumpfendes Bauteil aufgeschoben wird, worauf des abzudichtende Bereich der Verdrahtung einer Wärmebehandlung zum vorübergehenden oder bleibenden Aufquellen des eingebetteten Kunststoffelementes sowie zum Aktivieren des thermoplastischen Schmelzklebers und zum Zurückschrumpfen des wärmeschrumpfenden Bauteiles eng um die Verdrahtung unterzogen wird.

2. Verfahren nach Anspruch 1, dadurch gekennzeichnet, daß das einzubettende Kunststoffelement hergestellt ist durch Extrudieren einer Mantelschicht eines thermoplastischen Schmelzklebers um eine vorzugsweise als Rundmaterial ausgebildete Seele aus einem vernetzbaren Kunststoff, anschließendes wenigstens teilsweises Vernetzen des aus Seele und Schmelzkleberschicht bestehenden Elementes sowie abschließendes Recken dieses Elementes in Längsrichtung.

3. Verfahren nach Anspruch 2, dadurch gekennzeichnet, daß das Vernetzen durch Elektronenbestrahlung (Beta-oder Gamma-Strahlung) oder auf chemischem Wege erfolgt, daß das Recken des Elementes in einem Streckverhältnis von 2:1, 3:1 oder 4:1 erfolgt und daß als Werkstoff für die Seele, z. B. Polyethylen, verwendet wird.

4. Verfahren nach Anspruch 2 oder 3, dadurch gekennzeichnet, daß das Verhältnis aus dem Außendurchmesser der auf die Seele aufgebrachten Schmelzkleberschicht und dem Außendurchmesser der Seele vorzugsweise in einem Bereich von 2:1, 3:1 oder 4:1 liegt.

5. Verfahren nach einem der Ansprüche bis 4, dadurch gekennzeichnet, daß das Kunststoffelement mitten zwischen die Einzellitzen und/oder Kabelstränge des Verdrahtungssystems eingebettet wird.

6. Verfahren nach einem der Ansprüche 1 bis 4, dadurch gekennzeichnet, daß ein Kunststoffelement mit einer solchen Gestalt verwendet wird, daß nicht mehr als zwei Einzellitzen und/oder Kabelstränge miteinander in gegen seitiger Berührung sind.

7. Verfahren nach einem der Ansprüche 1 bis 6, dadurch gekennzeichnet, daß das einzubettende Kunststoffelement als Vollmaterial oder als Hohlmaterial oder als Formprofil ausgebildet wird.

8. Verfahren nach Anspruch 7, dadurch gekennzeichnet, daß auf dem Außenumfang des Kunststoffelementes Ausnehmungen oder Taschen zur Aufnahme von Einzellitzen und/oder Kabelsträngen ausgebildet werden.

9. Verfahren nach Anspruch 1 oder 7, dadurch gekennzeichnet, daß das einzubettende Kunststoffelement aus einem thermoplastischen Schmelzkleber besteht, der bei Erwärmung vorübergehend oder bleibend aufschäumt und dabei geschlossene Poren bildet, wobei im vorübergehenden Fall der Schmelzkleber nach Abkühlung die Ausgangskonsistenz wiedererlangt.

10. Verfahren nach wenigstens einem der Ansprüche 1 bis 9, dadurch gekennzeichnet, daß ein wärmeschrumpfendes Bauteil verwendet wird, das an seiner Innenoberfläche mit einer Beschichtung aus einem Schmelzkleber versehen ist.

11. Verfahren nach Anspruch 10, dadurch gekennzeichnet, daß die innere Schmelzkleberbeschichtung des wärmeschrumpfenden Bauteiles aus einem Schmelzkleberwerkstoff besteht, der bei Erwärmung vorübergehend oder bleibend aufschäumt und dabei geschlossene Poren bildet, wobei im vorübergehenden Fall der Schmelzkleber nach Abkühlung die Ausgangskonsistenz wiedererlangt.

12. Verfahren nach wenigstens einem der Ansprüche 1 bis 11, dadurch gekennzeichnet, daß zum Abdichten einer größeren Vielzahl von Einzellitzen und/oder Kabelsträngen um ein einzubettendes Kunststoffelement aus einem thermo plastischen Schmelzkleber, welches außen mit Längsnuten oder mit Aufnahmetaschen versehen ist, eine Vielzahl von Einzellitzen und/oder Kabelsträngen angeordnet wird, bis die vorgesehenen Nuten oder Aufnahmetaschen gefüllt sind, daß dann über das Kunststoffelement und die daran aufgenommenen Einzellitzen und/oder Kabelstränge ein teilweise vernetztes und vorgerecktes wärmeschrumpfendes Bauteil geschoben wird und die Anordnung einer Wärmebehandlung zur Aktivierung des Klebers und zum Schrumpfen des wärmeschrumpfendes Bauteiles unterworfen wird und daß anschließend über die geschrumpfte Anordnung ein Schmelzkleberelement geschoben wird, welches auf seinem Außenumfang eine Vielzahl von Nuten oder Taschen aufweist, in welche eine weitere Vielzahl von Einzellitzen und/oder Kabelsträngen eingelegt wird, und daß nach Maßgabe der Anzahl an Einzellitzen und/oder an Kabelsträngen gegebenenfalls diese Schritte wenigstens einmal wiederholt werden.

13. Verfahren nach einem der Ansprüche 1 bis 11, dadurch gekennzeichnet, daß bei Verwendung von hohlen Kunststoffelementen durch seitliches Aufschlitzen oder Öffnen Einzellitzen und/oder Kabelstränge durch den Innenraum des Kunststoffelementes hindurchgeführt werden.

14. Bausatz zum Ausbilden definierter längswasserdichter Bereiche in Verdrahtungen, die eine Vielzahl von Einzellitzen und/oder Kabelsträngen aufweisen, **gekennzeichnet** durch ein in der Wärme auf einen kleineren Durchmesser zurückschrumpfendes, wärmeschrumpfendes Bauteil (4) und wenigstens einen Kern aus einem durch Wärmebehandlung auf einen vorübergehend oder bleibend vergrößerten Querschnitt aufquellenden Material (1, 2), enthaltend einen oder bestehend aus einem thermoplastischen Schmelzkleber, wobei zwischen dem wärmeschrumpfenden Bauteil (4) und dem Kern ein hinreichend großer Raum zur Aufnahme von Einzellitzen und/oder Kabelsträngen (10) vorgesehen ist.

15. Bausatz nach Anspruch 14, dadurch gekennzeichnet, daß der Kern eine Seele (1) aus einem vernetzbaren Kunststoff und eine die Seele umgebende Mantelschicht aus einem thermoplastischen Schmelzkleber (2) aufweist und daß die Seele und der Mantel gemeinsam wenigstens teilweise vernetzt und nach dem Vernetzen in Längsrichtung gereckt sind.

Bausatz nach Anspruch 14, dadurch gekennzeichnet, daß der Kern allein aus einem thermoplastischen Schmelzkleber (2) besteht, welcher so eingestellt oder so vernetzt ist, daß er nach einer Längsreckung und nachfolgenden Erwärmung zurückschrumpft.

17. Bausatz nach Anspruch 15, dadurch gekennzeichnet, daß das Verhältnis aus dem Außendurchmesser der äußeren Schmelzklebermantelschicht (2) und dem Außendurchmesser der vorzugsweise aus Polyethylen bestehenden Seele vorzugsweise in einem Bereich von 2:1, 3:1 oder 4:1 liegt.

18. Bausatz nach Anspruch 14, dadurch gekennzeichnet, daß der Kern aus einem thermoplastischen Schmelzkleber besteht, der bei Erwärmung aufschäumt und dabei geschlossene Poren bildet.

19. Bausatz nach einem der Ansprüche 14 bis 17, dadurch gekennzeichnet, daß der Kern als Vollmaterial, als Hohlmaterial oder als Formprofil ausgebildet ist.

20. Bausatz nach einem der Ansprüche 14 bis 19, dadurch gekennzeichnet, daß auf dem Außenumfang des Kunststoffelements Ausnehmungen oder Taschen zur Aufnahme von Einzellitzen und/oder Kabelsträngen ausgebildet sind.

21. Bausatz nach Anspruch 20, dadurch gekennzeichnet, daß die Ausnehmungen oder Taschen so bemessen sind, daß nicht mehr als zwei Einzellitzen und/oder Kabelstränge in ihnen aufnehmbar sind.

22. Bausatz nach einem der Ansprüche 14 bis 21, dadurch gekennzeichnet, daß in dem Raum zwischen dem inneren Kern (1, 2) und dem wärmeschrumpfenden Bauteil (4) wenigstens ein rohrförmiger Körper (S1; S2) vorgesehen ist, der aus einem teilweise vernetzten und vorgestreckten, thermoplastischen Schmelzkleber oder einem in der Wärme unter Schaumentwicklung aufquellender Schmelzkleber besteht und auf seiner Außenoberfläche mit einer Vielzahl von sich in Längsrichtung erstreckenden Ausnehmungen oder Taschen zur Aufnahme von Kabelsträngen oder Einzellitzen (10) versehen ist.

23. Bausatz nach einem der Ansprüche 14 bis 22, dadurch gekennzeichnet, daß das wärmeschrumpfende Bauteil (4) an seiner Innenoberfläche mit einer Schicht (6) aus einem thermoplastischen Schmelzkleber versehen ist.

24. Bausatz nach Anspruch 23, dadurch gekennzeichnet, daß die Innenbeschichtung (6) des wärmeschrumpfenden Bauteiles (4) aus einem thermoplastischen Schmelzkleber besteht, der bei Erwärmung aufschäumt und dabei geschlossene Poren bildet.

25. Bausatz nach einem der Ansprüche 14 bis 24, dadurch gekennzeichnet, daß bei als Hohlkörper ausgebildeten Kernen (1, 2) Einzeladern und/oder Kabelstränge durch seitliches Aufschlitzen oder Öffnen durch den Hohlraum hindurchführbar sind.

0 260 553

Figur 1

Figur 2

Figur 3

Figur 4

Figur 5

**Figur 6**

**Figur 10**

**Figur 7**

**Figur 11**

**Figur 8**

**Figur 9**

FIG.12

FIG. 13

FIG. 14

FIG.15A

FIG.15 B